# EUROPÄISCHE PATENTSCHRIFT

(11) **EP 1 969 032 B1**
(45) Veröffentlichungstag und Bekanntmachung des Hinweises auf die Patenterteilung: **27.04.2011**
(21) Anmeldenummer: 06829660.7
(22) Anmeldetag: 15.12.2006
(51) Int. Cl.: C08G 73/02, C25D 3/02, C25D 3/22, C25D 3/12, C25D 3/20, C25D 3/56

(54) **QUERVERNETZTE POLYMERE, DIESE ENTHALTENDE GALVANISIERUNGSBÄDER SOWIE DEREN VERWENDUNG**
CROSSLINKED POLYMERS, GALVANIZATION BATHS COMPRISING THEM AND USE THEREOF
POLYMERES RETICULES, BAINS DE GALVANISATION LES COMPRENANT AINSI QUE LEUR UTILISATION

(30) Priorität: 15.12.2005 DE 102005060030
(43) Veröffentlichungstag der Anmeldung: 17.09.2008
(73) Patentinhaber: COVENTYA GMBH, 33334 Gütersloh (DE)
(72) Erfinder: JIMENEZ, Alexander, 51429 Bergisch Gladbach (DE); KÜHLER, Thorsten, 32107 Bad Salzuflen (DE)
(74) Vertreter: Pfenning, Meinig & Partner GbR
(86) Internationale Anmeldenummer: PCT/EP2006/012124
(87) Internationale Veröffentlichungsnummer: WO 2007/073890

(56) Entgegenhaltungen:
- WO-A-01/92605
- WO-A-2005/093132
- DE-C1- 19 840 019
- US-A1- 2004 084 322

## Beschreibung

Die Erfindung betrifft Polymere, die aus zumindest teilweise quervernetzten Hauptketten aufgebaut aus Wiederholeinheiten der allgemeinen Formel I 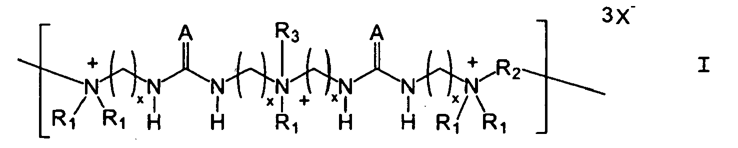 und gegebenenfalls Wiederholeinheiten der allgemeinen Formel II 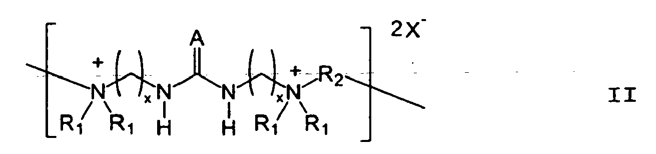 sowie gegebenenfalls Wiederholeinheiten aus fünf- oder sechsgliedrigen Azaaromaten oder stickstoffhaltigen Heterocyclen bestehen. Derartige Polymere finden als Additiv in Galvanisierungsbädern Verwendung, da diese eine bessere Schichtdickenverteilung der galvanischen Schicht ermöglichen.

Für die galvanische Beschichtung von Bauteilen mit Zink sind seit vielen Jahren drei grundsätzlich unterschiedliche Verfahren bekannt. Man unterscheidet saure, alkalisch cyanidische und alkalisch cyanfreie Bäder.

Aus sauren Bädern werden glänzende Zinkschichten mit einer Stromausbeute von 100% unabhängig von der Stromdichte abgeschieden. Dies führt dazu, dass auf geometrisch komplizierten Bauteilen eine sehr ungleichmäßige Verteilung der Schichtdicke erzielt wird.

Alkalische Bäder zeigen diesen Nachteil nicht so stark, da hier die Stromausbeute mit steigender Stromdichte abnimmt. Cyanidische Bädern werden aus Gründen des Umweltschutzes und der Arbeitssicherheit inzwischen weitestgehend abgelehnt. Für die Verzinkung von geometrisch komplizierten Bauteilen hat sich daher seit einigen Jahren die Beschichtung aus alkalisch cyanidfreien Elektrolyten durchgesetzt.

Aus einfachen Zinkatlösungen lassen sich nur rauhe, dendritische Zinkniederschläge abscheiden, die für die industrielle Anwendung nicht geeignet sind. Daher wurden diesen Bädern polymere Reaktionsprodukte von Aminen und Epichlorhydrin als sog. Kornverfeinerer zugegeben. Solche Bäder leiden allerdings unter einer Beschränkung der anwendbaren Stromdichten und Metallkonzentrationen und führen häufig zu geringen Stromausbeuten.

Diese einfachen Amin-Epichlorhydrin-Umsetzungsprodukte werden in modernen Verfahren durch die Verwendung von Polymeren, die Harnstoffgruppen enthalten, ersetzt um eine weitere Verbesserung der Schichtdickenverteilung sowie der anwendbaren Stromdichten und Metallkonzentrationen zu erreichen. Die US 5,405,523 und die US 5,435,898 beschreiben die Verwendung entsprechender Polymere als Additive in alkalischen Bädern zur Abscheidung von Zink- und Zinklegierungsschichten. Diese Verbindungen basieren auf der folgenden allgemeinen Formel 1:

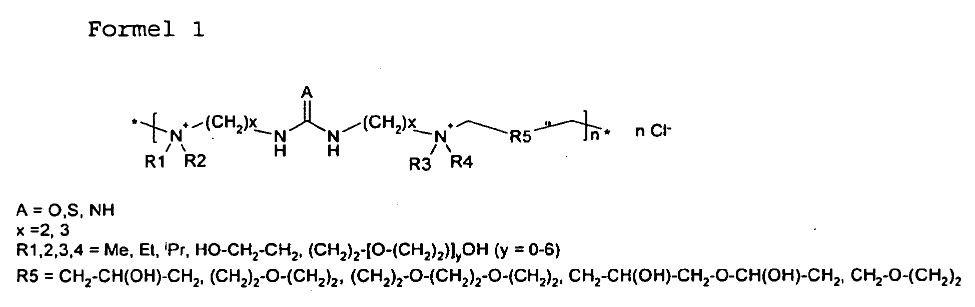

Eine in der galvanischen Verzinkung häufig benutzte Verbindung dieses Typs ist Mirapol WT von Rhodia mit A = O, x = 3, R1 = R2 = R3 = R4 = Me und
R5 = (CH₂)₂-O-(CH₂)₂.

Die Herstellung solcher Verbindungen ist unter anderem in der US 4,157,338 beschrieben.

In jüngerer Zeit wurden Additive zur Abscheidung von Zink- und-Zinklegierungsschichten vorgeschlagen, die anstelle der Etherfunktion einen Alkylenspacer zur Verknüpfung der Ammoniumeinheiten aufweisen. Die Herstellung und Verwendung dieser Additive der allgemeinen Formel 2 werden in der DE 198 40 019 C1 und der EP 1 075 553 B1 beschrieben.

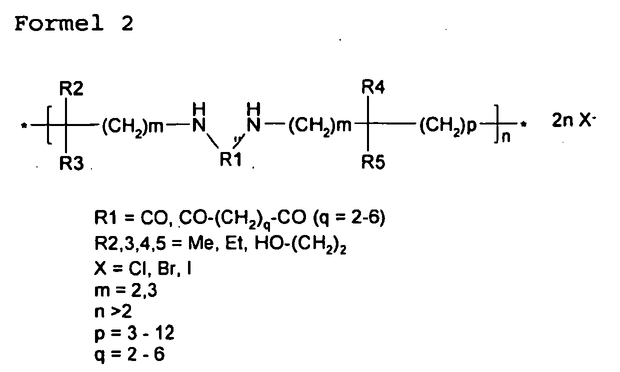

Eine Verbindung dieses Typs mit R1 = CO,
R2 = R3 = R4 = R5 = Me, m = 3 und p = 3 wird unter dem Handelsnamen BC915 von der Firma BrookChem vertrieben.

All diesen Additiven ist gemein, dass es sich hierbei um Additive handelt, die auf linearen Polymersystemen basieren. Bei den aus dem Stand der Technik bekannten Additiven ist die Problemstellung, eine Verbesserung der Schichtdickenverteilung bei gleichzeitig akzeptablen Stromdichten zu erreichen, nur sehr schwer zu lösen. Auch die aus dem Stand der Technik bekannten Additive können diesbezüglich keine vollständig zufrieden stellenden Ergebnisse liefern.

In der WO 2005/093132 A1 ist ein Zink-Galvanisierungsbad beschrieben, das Zinkionen und ein Aufhellungsagens beinhaltet. Das Aufhellungsagens ist hierbei ein Polyamin oder eine Mischung von Polyaminen, die eine quartäre Ammoniumgruppe aufweisen.

Ausgehend hiervon war es Aufgabe der vorliegenden Erfindung, als Additiv geeignete Verbindungen bereitzustellen, die eine verbesserte Schichtdickenverteilung bei möglichst hoher Stromdichte und möglichst hoher Metallkonzentration in dem Galvanikbad ermöglichen. Diese Aufgabe wird durch das gattungsgemäße Polymer mit den kennzeichnenden Merkmalen des Anspruchs 1, das Verfahren zu dessen Herstellung mit den Merkmalen des Anspruchs 9 und durch das gattungsgemäße Galvanisierungsbad mit den kennzeichnenden Merkmalen des Anspruchs 12 gelöst. Die weiteren abhängigen Ansprüche zeigen vorteilhafte Weiterbildungen auf. In Anspruch 17 werden die Verwendungen des erfindungsgemäßen Polymers bereitgestellt.

Erfindungsgemäß wird ein Polymer mit zumindest teilweise vernetzten polymeren Hauptketten aufgebaut aus Wiederholeinheiten der allgemeinen Formel I 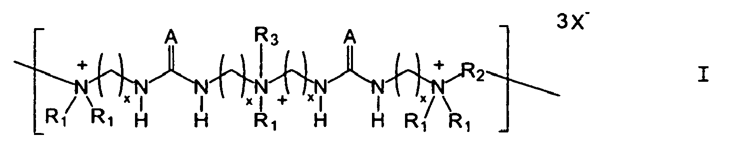 und gegebenenfalls aus Wiederholeinheiten der allgemeinen Formel II 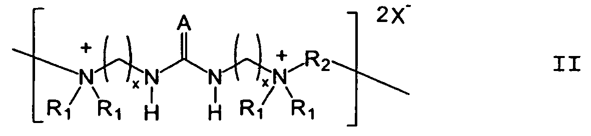 mit
A ausgewählt aus der Gruppe bestehend aus O, S und NH,
R₁ jeweils unabhängig voneinander geradkettiges oder verzweigtes C₁- bis C₈-Alkyl, geradkettiges oder verzweigtes C₁- bis C₈-Hydroxyalkyl und geradkettiges oder verzweigtes C₁- bis C₈-Hydroxyalkoxy,
R₂ jeweils unabhängig voneinander geradkettiges oder verzweigtes C₁- bis C₈-Alkylen, geradkettiges oder verzweigtes C₁- bis C₈-Hydroxyalkylen und geradkettiges oder verzweigtes C₁- bis C₈-Hydroxyalkoxy,
R₃ jeweils unabhängig voneinander geradkettiges oder verzweigtes C₁- bis C₈-Alkyl, geradkettiges oder verzweigtes C₁- bis C₈-Hydroxyalkyl, geradkettiges oder verzweigtes C₁- bis C₈-Hydroxyalkoxy, geradkettiges oder verzweigtes C₁- bis C₈-Alkylen, geradkettiges oder verzweigtes C₁- bis C₈-Hydroxyalkylen, geradkettiges oder verzweigtes C₁-C₈-Alkylenoxy, eine Wiederholeinheit der allgemeinen Formeln II oder III und/oder eine Einfachbindung,
X⁻ ein als Gegenion zu den quaternären Ammoniumionen geeignetes Ion und
x = 2 oder 3,
sowie gegebenenfalls aus Wiederholeinheiten der allgemeinen Formel III bereitgestellt, 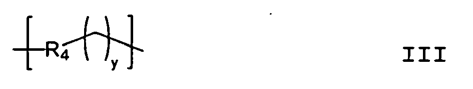 wobei R₄ ausgewählt ist aus der Gruppe der fünf- oder sechsgliedriger Azaaromaten mit mindestens zwei Stickstoffatomen oder deren substituierten Derivaten, y = 1 bis 6. Ebenso ist es möglich, dass R₄ ein stickstoffhaltiger Heterocyclus mit mindestens zwei Stickstoffatomen ist. Es können dabei von 10 bis 300 Wiederholeinheiten der allgemeinen Formel I und von 0 bis 300 Wiederholeinheiten der allgemeinen Formeln II und III im erfindungsgemäßen Polymer enthalten sein.

Das vorliegende Polymer zeichnet sich gegenüber den aus dem Stand der Technik bekannten Additiven nun dadurch aus, dass über zumindest jeweils einen der Reste R₃ zweier Wiederholeinheiten der allgemeinen Formel I eine Quervernetzung der Hauptketten besteht. Mit anderen Worten, zwei Hauptketten mit jeweils darin enthaltenen Wiederholeinheiten der Formel I können jeweils über die Reste R₃ verbrückt, d.h. vernetzt, sein. Der Rest R₃ ist dann in einem Fall eine Einfachbindung, im anderen Fall eine Gruppe gemäß R₂, z.B. eine Alkylengruppe. Eine Vernetzung von zwei oder mehr Hauptketten untereinander kann dabei jeweils an der Position R₃ der jeweiligen Wiederholeinheiten der allgemeinen Formel I erfolgen.

Überraschenderweise konnte gezeigt werden, dass Polymere, die die erfindungsgemäße Struktur aufweisen, deutlich verbesserte Eigenschaften bezüglich der Schichtdickenverteilung in Galvanisierungsbädern aufweisen. Die erfindungsgemäßen Polymere unterscheiden sich vom Stand der Technik dadurch, dass sie nach der Polykondensation Verzweigungen aufweisen und Netzwerke ausbilden. Diese verzweigten Polymere sind in der Lage, die Schichtdickenverteilung schon bei geringeren Konzentrationen als bei denen aus dem Stand der Technik bekannten Polymer-Additiven positiv zu beeinflussen bzw. eine bessere Schichtdickenverteilung zu ermöglichen.

In einer weiteren bevorzugten Ausführungsform sind die Reste R₁ jeweils unabhängig voneinander ausgewählt aus der Gruppe bestehend aus Methyl, Ethyl, Isopropyl, 2-Hydroxyethyl und -(CH₂)₂-[O-(CH₂)₂]_{z}-OH mit z = 0 bis 6. Vorzugsweise können der Azaaromat oder der stickstoffhaltige Heterocyclus durch mindestens einen Rest R₄, ausgewählt aus geradkettigen oder verzweigten C₁-C₈-Alkylgruppen, substituiert sein. Dabei ist der Azaaromat bevorzugt ausgewählt aus der Gruppe bestehend aus Imidazol, Pyrazol, Pyrazidin, Pyrimidin, Pyrazin, Triazine und Tetrazin. Der stickstoffhaltige Heterocyclus ist z.B. Piperazin oder Imidazolidim.

Sowohl die Azaaromaten als auch die stickstoffhaltigen Heterocyclen können dabei durch mindestens einen Rest R₇ ausgewählt aus der Gruppe der geradkettigen oder verzweigten C₁-C₈-Alkyle substituiert sein oder andere Heteroatome, wie z.B. Schwefel- oder Sauerstoffatome, aufweisen.

Eine besonders bevorzugte Ausführungsform des Polymers basiert auf der allgemeinen Formel I, wobei A = O, R₁ jeweils = Methyl und R₂ jeweils unabhängig voneinander ausgewählt ist aus der Gruppe bestehend aus geradkettigem oder verzweigtem C₁- bis C₈-Alkylen, geradkettigem oder verzweigtem C₁- bis C₈-Hydroxyalkylen und geradkettigem oder verzweigtem C₁- bis C₈-Alkylenoxy. R₃ kann dabei die zuvor genannte Bedeutung haben.

Dabei erfolgt über jeden 3. bis jeden 20., insbesondere jeden 3. bis jeden 13. Rest R₃ einer Wiederholeinheit der allgemeinen Formel I eine Quervernetzung der Hauptketten.

Das erfindungsgemäße Polymer weist vorzugsweise ein mittleres Molekulargewicht im Bereich von 1000 bis 200000 g/mol, bevorzugt von 10000 bis 100000 g/mol auf.

Als X⁻ kommen alle als Gegenion geeigneten Ionen in Betracht, wobei hier Halogenide, insbesondere Cl⁻, Br⁻ oder I⁻ bevorzugt sind. Erfindungsgemäß wird ebenso ein Verfahren zur Herstellung des erfindungsgemäßen Polymers bereitgestellt, bei dem in einem ersten Schritt Harnstoff oder dessen Heteroanaloga der allgemeinen Formel IV 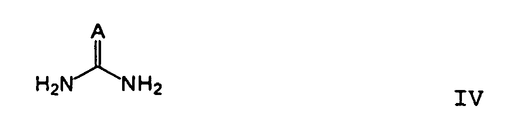 mit A ausgewählt aus der Gruppe bestehend aus O, S, NH,
mit einem N,N-Dialkylaminoalkylamin der allgemeinen Formel V. 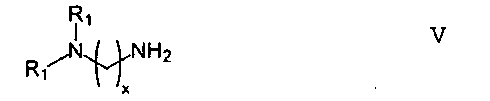 und einem N,N-Bis-(aminoalkyl)-alkylamin der allgemeinen Formel VI 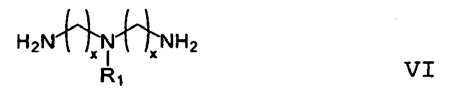 mit R₁ jeweils unabhängig voneinander ausgewählt aus der Gruppe bestehend aus geradkettigem oder verzweigten C₁- bis C₈-Alkyl, geradkettigem oder verzweigten C₁- bis C₈-Hydroxyalkyl und geradkettigem oder verzweigten C₁- bis C₈-Hydroxyalkoxy
unter Bildung von Di- und Tri-tert-Aminverbindungen umgesetzt wird und das Reaktionsprodukt in einem zweiten Schritt mit einem Alkyldihalogenid der allgemeinen Formal VII

Hal-R₂-Hal VII

umgesetzt wird.

Bevorzugt erfolgt die Umsetzung im ersten Schritt bei Temperaturen im Bereich von 100 bis 300 °C unter Rühren, wobei zusätzlich sich bildendes Ammoniak abgeführt werden kann.

Vorzugsweise werden im zweiten Schritt die Di- und Tri-tert-Aminverbindungen in Wasser gelöst und das Alkyldihalogenid im Anschluss langsam unter Rühren bei Temperaturen im Bereich von 60 bis 200 °C zugesetzt.

Erfindungsgemäß wird ebenso ein Galvanisierungsbad für die galvanische Abscheidung von Metallen und/oder Metalllegierungen bereitgestellt. Dieses enthält mindestens ein zur galvanischen Abscheidung geeignetes Metallion und Hydroxidion. Erfindungswesentlich ist, dass das Galvanisierungsbad zusätzlich als Additiv ein erfindungsgemäßes Polymer, wie zuvor beschrieben, enthält.

Vorzugsweise sind in dem Galvanisierungsbad Zink-Ionen enthalten, so dass das Galvanisierungsbad für die Zink-Abscheidung genutzt werden kann. Weitere Metallionen, die im Galvanisierungsbad enthalten sein können, sind Kobalt-, Nickel-, Mangan-, Eisen- und Zinn-Ionen.

Vorzugsweise weist das Galvanisierungsbad eine Konzentration des Polymers von 0,1 bis 5 g/l, insbesondere von 0,3 bis 1,5 g/l auf.

Selbstverständlich kann das Galvanisierungsbad weitere, aus dem Stand der Technik bekannte Additive enthalten. Übliche Additive sind z.B. aromatische Aldehyde, Polyvinylalkohole, quarternäre Pyridiniumverbindungen, quaternäre Nikotinate, Polyglykole und deren Derivate, aliphatische Polyamine, aliphatische Polymere mit tertiären und quaternären Stickstoffatomen, Reaktionsprodukte von aliphatischen und aromatischen Aminen mit Epichlorhydrin, Komplexbildner, Glukonate, Citrate, Tartrate, Silikate, Thioverbindungen und Aminoalkohole wie DEA, TEA oder Monoethanolamin.

Verwendung findet das erfindungsgemäße Polymer als Additiv bei der galvanischen Abscheidung von Metallen und/oder Metalllegierungen.

Anhand der nachfolgenden Figuren und Beispiele soll der erfindungsgemäße Gegenstand näher erläutert werden, ohne diesen auf die hier beschriebenen speziellen Ausführungsformen einschränken zu wollen.

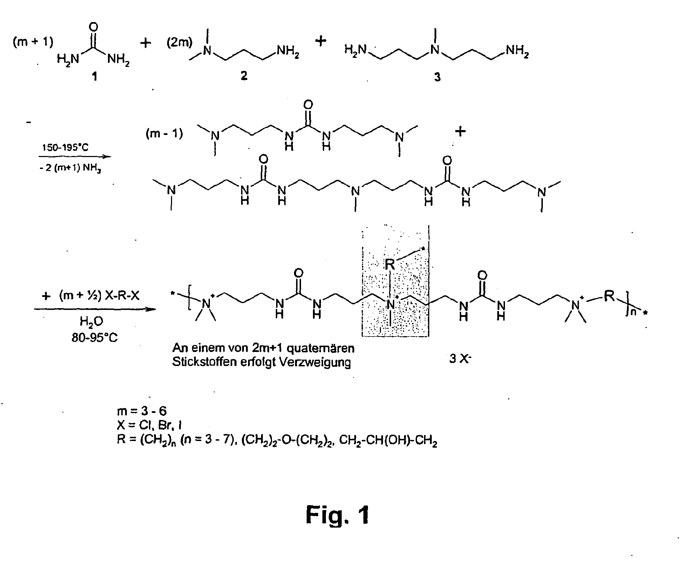

- Fig. 1: zeigt ein Reaktionsschema für die Herstel- lung erfindungsgemäßer Polymere.
- Fig. 2: zeigt anhand einer Skizze den versuchsmäßi- gen Aufbau für eine Jiggle-Zelle zur Unter- suchung der Schichtdickenverteilung.
- Fig. 3: zeigt anhand eines Diagramms die Gegenüber- stellung von erfindungsgemäßen Additiven gegenüber aus dem Stand der Technik bekann- ten Additiven hinsichtlich der Schicht- dicke.
- Fig. 4: zeigt die Schichtdickenverteilung für ein erfindungsgemäßes Polymer ebenso wie für ein aus dem Stand der Technik bekanntes Po- lymer.

### Beispiel 1:

Darstellung der Vorstufe B (m)
(m + 1) n₀ Mol Harnstoff,
(2 m) n₀ Mol N,N-Dimethylaminopropylamin
n₀ Mol N,N-Bis-(aminopropyl)-methylamin
werden unter kräftigem Rühren innerhalb von 3 h bis auf 150-160 °C, anschließend 90 min bis auf ca. 200 °C erhitzt (Innentemperatur).

Das ab ca. 100°C entstehende Ammoniak wird über den Kühler abgeleitet. (Nach Reaktionsende kann noch in der Reaktionsmischung vorhandenes Ammoniak, nicht umgesetztes Edukt sowie unten im Kühler gebildeter Harnstoff durch Erhitzen (> 120 °C) im Hoch-/ Wasserstrahlvakuum entfernt werden.)

Man erhält B(m) als schwach gelbe hochviskose Flüssigkeit (s. Tabelle 1).

**Tabelle 1:**

| m | Harnstoff | | N,N-Dimethylaminopropylamin | | N,N-Bis-(aminopropyl)-methylamin | | Ansatzgröße | Masse (100%) Vorstufe |
|---|---|---|---|---|---|---|---|---|
| | | | | | | | | |
| | | | | | | | | |
| | | | | | | | | B(m)= |
| | M = 60,06 | | M = 102,18 | | M = 145,25 | | (∑ | [(m-1) |
| | g/mol | | g/mol | | g/mol | | Flüssigkeits | M(4a) + |
| | (m + 1) n₀ | | (2 m) n₀ | | n₀ (konst.) | | -vol.) | M(4b)] n₀ |
| | mol | g | mol | g | mol | g | ml | g |
| 3 | 0,4 | 24,02 | 0,6 | 61,31 | 0,1 | 14,53 | 90 | 86,23 |
| 4 | 2,0 | 120,12 | 3,2 | 326,98 | 0,4 | 58,10 | 459 | 437,05 |
| 6 | 0,7 | 42,04 | 1,2 | 122,62 | 0,1 | 14,53 | 164 | 155,34 |
| 10 | 0,55 | 33,03 | 1,0 | 102,18 | 0,05 | 7,26 | 133 | 123,74 |

### Beispiel 2:

### Darstellung quervernetzter Additive

Die Di-/Tri-tert-Amin-Verbindung (Vorstufe B(m)) wird in Wasser gelöst (Die Wassermenge wird so gewählt, dass das Produkt in Form einer ca. 40 %igen Lösung anfällt) und auf 70-95°C erhitzt. Unter Rühren wird innerhalb von ca. 40 min das Dihalogenid zugegeben, nach 1 h Rühren wird die Badtemperatur für weitere 3 h auf 100-105°C erhöht (Anschließend kann im Bedarfsfall überschüssiges Dihalogenid als Azeotrop mit Wasser abdestilliert werden).

Man erhält eine farblose bis gelbe, je nach Wassergehalt viskose Flüssigkeit (s. Tabelle 2).

**Tabelle 2:**

| Nr. | M | Di-/Tri-*tert*-Amin-Verbindung | | | Dihalogen-Verbindung | |
|---|---|---|---|---|---|---|
| | | n₀ | tert. N-Atome: (2m +1) n₀ | Masse B(m) = [(m-1) M(4a) + M(4b)] n₀ | (m+½) n₀ | Masse |
| 1 | 3 | 0,029 mol | 0,20 mol | 24,64 g | 0,10 mol | 14,30 g BCEE |
| 2 | | | | | | 15,51 g DCH |
| 3 | | | | | | 24,40 g DBH |
| 4 | | 0,116 mol | 0,81 mol | 100 g | 0,41 mol | 63,80 g TMCB |
| 5 | 4 | 0,05 mol | 0,45 mol | 54,63 g | 0,225 mol | 32,18 g BCEE |
| 6 | | | | | | 34,89 g DCH |
| 7 | | | | | | 54,90 g DBH |
| 8 | | 0,044 mol | 0,40 mol | 50 g | 0,20 mol | 32,40 g TMCB |
| 9 | 6 | 0,015 mol | 0,20 mol | 23,90 g | 0,10 mol | 14,30 g BCEE |
| 10 | 10 | 0,010 mol | 0,20 mol | 23,57 g | 0,10 mol | 14,30 g BCEE |

| | | | | | | |
|---|---|---|---|---|---|---|
| BCEE = Bis(2-chlorethyl)ether, DCH = 1,6-Dichlorhexan, DBH = 1,6-Dibromhexan, TMCB = 1-Brom-3-Chlorpropan | | | | | | |

Zur Untersuchung der Eigenschaften der Additive wurden verschiedene vergleichende Experimente durchgeführt. Die Durchführung und die Ergebnisse sind in den Beispielen 4 bis 7 beschrieben.

### Beispiel 3:

### Darstellung quervernetzter Polymere mit heterocyclischen Wiederholeinheiten

Die Di-/Tri-tert-Amin-Verbindung und die heterocyclischen Verbindungen werden in Wasser gelöst (die Wassermenge wird so gewählt, dass das Produkt in Form einer ca. 40 %-igen Lösung anfällt) und auf 70 bis 95 °C erhitzt. Unter Rühren wird innerhalb von ca. 60 min. das Dihalogenid zugegeben, nach ca. 1 h Rühren wird die Badtemperatur für weitere 3 h auf ca. 100 bis 105 °C erhöht (anschließend kann im Bedarfsfall überschüssiges Dihalogenid als Azeotrop mit Wasser abdestilliert werden).

Man erhält eine farblose bis gelbe, je nach Wassergehalt viskose Flüssigkeit (s. Tabelle 3).

**Tabelle 3:**

| Nr. | m | Di-/Tri-*tert*-Amin-Verbindung | | | Heterocyclus | | Dihalogenverbindung | |
|---|---|---|---|---|---|---|---|---|
| | | n/mol | tert. N-Atome (2m+1) n/mol | Masse B(m) | n/mol | Masse | N/mol | Masse |
| 11 | 3 | 0,029 | 0,2 | 24,7 g | 0,02 | 2,3 g N,N'-Dimethyl-piperazin | 0,1 | 15,7 g TMCB |
| 12 | 4 | 0,044 | 0,4 | 50 g | 0,037 | 2,5 g Imidazol | 0,24 | 38 g TMCB |

### Beispiel 4:

Zusammensetzung des Elektrolyten:

| | | |
|---|---|---|
| Natriumhydroxid | NaOH | 125 g/L |
| Zinkoxid | ZnO | 17.4 g/L(entspricht 14 g/L Zink) |
| Stabilisator | | 20 mL/L |
| Glanzzusatz | | 0.5 mL/L |

zu testende Additive (40%ige Lösungen) 4 mL/L

Durchführung der HULL-Zell-Untersuchung:
Man gibt den gut durchmischten Elektrolyten in die HULL-Zelle. Ein verzinktes Stahl-HULL-Zell-Blech wird mit halbkonzentrierter Salzsäure entzinkt, 2 min bei 6 A anodisch entfettet und 20 s mit 10 %iger Schwefelsäure dekapiert. Nach jedem Vorbehandlungsschritt wird gründlich mit Wasser gewaschen. Das Blech wird in der HULL-Zelle 15 min bei 1 A (Raumtemperatur) beschichtet. Als Anode dient eine zuvor in halbkonzentrierter Salzsäure gebeizte Stahlanode. Nach dem Galvanisieren wird das Blech mit entionisiertem Wasser gewaschen, 5 s in 0.5 %iger Salpetersäure aufgehellt, erneut mit entionisiertem Wasser gewaschen und mit Fließpapier getrocknet.

Die Schichtdicke wird mit Röntgenfluoreszenzspektroskopie an zwei Messpunkten bestimmt. Der erste Messpunkt liegt 2.5 cm der zweite 8.5 cm vom linken Rand des Blechs entfernt. Das Verhältnis der Schichtdicke am zweiten zu der am ersten Messpunkt ist ein Maß für die Streufähigkeit des Elektrolyten. Je höher dieser Wert ist, desto besser ist die Metallverteilung. Bei einem Wert von 1 ist die Schichtdicke im gesamten nahezu Stromdichtebereich gleich. Die Ergebnisse sind in Tabelle 4 dargelegt.

**Tabelle 4:**

| **Nr.** | **Additiv aus Versuch Nr.** | **Glanzgrad** | **Streufähigkeit** |
|---|---|---|---|
| 13 | Mirapol WT (60%) | Halbglänzend | 0,44 |
| 14 | Mirapol WT (40%) | Halbglänzend | 0,49 |
| 15 | 1 (40%) | Glänzend | 0,71 |
| 16 | 2 (40%) | Matt, wolkig | 0,87 |
| 17 | 5 (52%) | Glänzend | 0,56 |
| 18 | 6 (62%) | Matt, wolkig | 1,00 |
| 19 | 9 (40%) | Glänzend | 0,61 |
| 20 | 10 (40%) | Glänzend | 0,59 |

Im Vergleich zu Mirapol WT zeigen alle untersuchten Additive eine Verbesserung der Metallverteilung/Streufähigkeit.

### Beispiel 5:

Zusammensetzung des Elektrolyten:

| | | |
|---|---|---|
| Natriumhydroxid | NaOH | 120 g/L |
| Zink | Zn²⁺ | 10.5 g/L |
| Na₂EDTA (10%) | | 4 mL/L |
| Thioharnstoff (90 g/L) | | 0.8 mL/L |
| Additiv (als Festsubstanz) | | 600 mg/L |

Die Bleche werden analog zu dem oben beschriebenen Versuch 10 Minuten bei 2 A beschichtet. Die Ergebnisse sind in Tabelle 5 dargelegt. Zur Bestimmung der Eigenschaften der Additive wird die Schichtdicke an zwei Messpunkten 2.5 cm und 7.5 cm vom linken Rand des Blechs bestimmt. Als Maß für die Metallverteilung werden die Schichtdicken an Punkt 1 und Punkt 2 ins Verhältnis gesetzt. Je niedriger das Verhältnis r ist, desto besser ist die Metallverteilung.

**Tabelle 5:**

| Nr. | Additiv aus Versuch Nr. | Glanzgrad | r |
|---|---|---|---|
| 21 | Mirapol WT | Halbglänzend | 1.55 |
| 22 | BC 915 | Halbglänzend | 1.72 |
| 23 | 1 | Glänzend | 1.11 |
| 24 | 5 | Halbglänzend | 1.33 |
| 25 | 8 | Halbglänzend | 1.60 |

Die Metallverteilung ist bei allen untersuchten Additiven besser als bei den Vergleichssubstanzen.

### Beispiel 6:

Zusammensetzung des Elektrolyten:

| | | |
|---|---|---|
| Natriumhydroxid | NaOH | 120 g/L |
| Zink | Zn²⁺ | 10.5 g/L |
| Na₂EDTA (10%) | | 4 mL/L |
| Thioharnstoff (90 g/L) | | 0.8 mL/L |
| Additiv (als Festsubstanz) | | 600 mg/L |
| N-Benzylnicotinatbetain (3.6%) | | 4 mL/L |

Durchführung der Untersuchung in der Jiggle-Zelle:

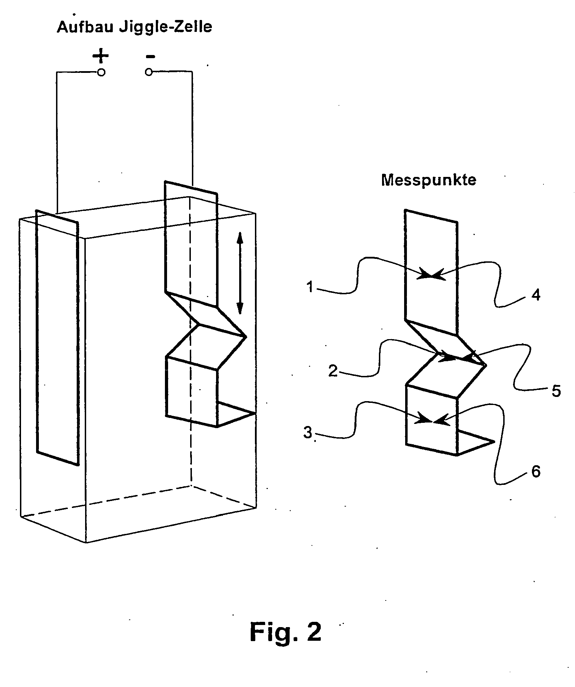

Es werden Prüfbleche in einer sog. Jiggle-Zelle 30 min. bei 3 A beschichtet. Der Versuchsaufbau ist in Fig. 2 skizziert. Das Elektrolytvolumen beträgt 1 Liter. Bei dem Kathodenblech handelt es sich um ein Stahlblech von 20 cm Gesamtlänge und 3.5 cm Breite, das wie in der Skizze angedeutet gebogen ist. Die Kathode wird während des Beschichtens vertikal bewegt. Als Anode dient eine Stahlanode. Nach dem Beschichten werden die verzinkten Stahlbleche mit entionisiertem Wasser gewaschen, 15 s in 0.5 %iger Salpetersäure aufgehellt, erneut mit entionisiertem Wasser gewaschen und mit Fließpapier getrocknet.

Die Schichtdicke wird auf der anodenzugewandten und der anodenabgewandten Seite des Blechs an den in der Abbildung skizzierten Punkten gemessen.

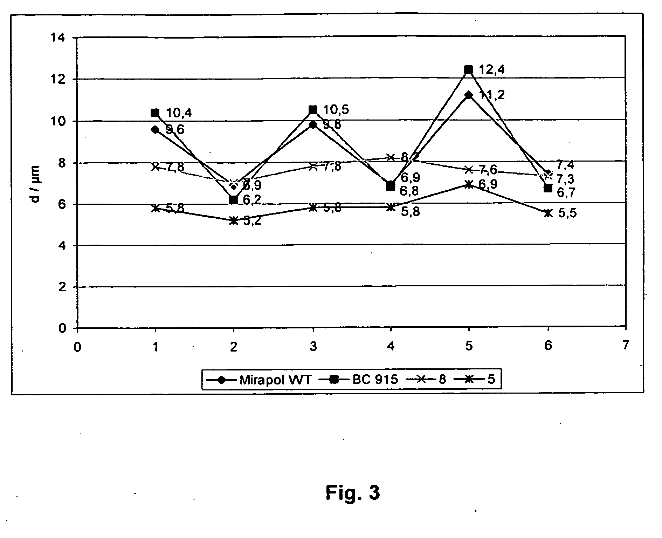

In der beschriebenen Art und Weise wurden die Vergleichssubstanzen Mirapol WT und BC 915 sowie die Substanzen aus den Versuchen Nr. 5 und Nr. 8 untersucht. Die Ergebnisse der Schichtdickenmessung sind in Fig. 3 graphisch dargestellt. Man erkennt deutlich eine wesentlich gleichmäßigere Verteilung der Schichtdicke über das Blech bei Verwendung der erfindungsgemäßen Verbindungen.

### Beispiel 7:

Zusammensetzung des Elektrolyten:

| | | |
|---|---|---|
| Natriumhydroxid | NaOH | 120.g/L |
| Zink - | Zn²⁺ | 12 g/L |
| Performa 260 Brightener RAC | | 0.5 mL/L |
| Performa 260 Stabilisator | | 75 mL/L |
| Performa 260 Base Fe | | 2.5 mL/L |
| Additiv (als Festsubstanz) | | 800 mg/L |

Durchführung der Hull-Zell-Untersuchung zur Abscheidung von Zink-Eisen-Legierungsschichten:

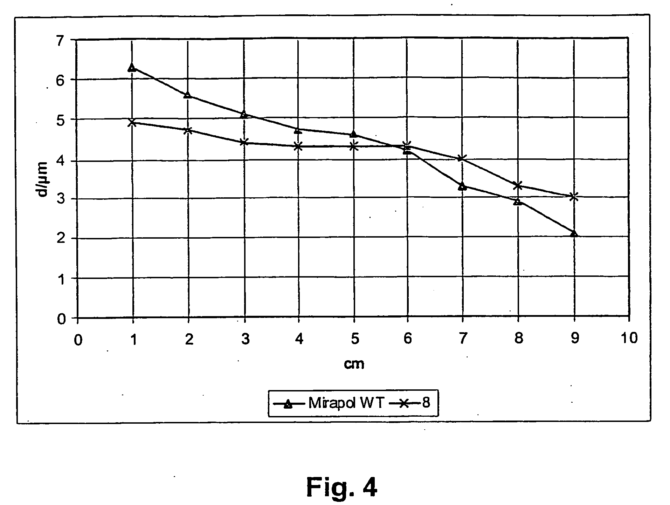

Hull-Zellen-Bleche werden analog dem unter Beispiel 4 beschriebenen Versuch 15 min. bei 2 A beschichtet. Die Schichtdicke wird an 9 Messpunkten auf dem Blech im Abstand von je 1, 2, 3, 4, 5, 6, 7, 8 und 9 cm vom linken Rand gemessen. Das Ergebnis der Untersuchung für die Verbindung aus Versuch 8 und Mirapol WT ist in Fig. 4 vergleichend dargestellt. Man erkennt, dass bei Verwendung der erfindungsgemäßen Verbindung eine deutlich bessere Metallverteilung erreicht wird. Außerdem ist die Stromausbeute im Bereich niedriger Stromdichte besser als bei Verwendung von Mirapol WT (Messpunkt 7, 8, 9).

## Patentansprüche

1. Polymer mit zumindest teilweise vernetzen polymeren Hauptketten aufgebaut aus Wiederholeinheiten der allgemeine Formel I 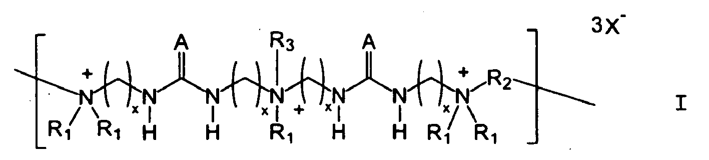 und gegebenenfalls Wiederholeinheiten der allgemeinen Formel II 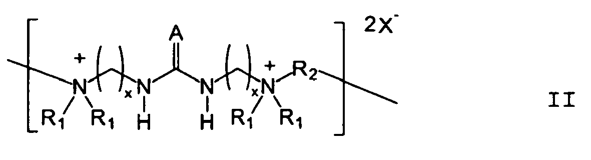 mit
A ausgewählt aus der Gruppe bestehend aus O, S, NH,
R₁ jeweils unabhängig voneinander ausgewählt aus der Gruppe bestehend aus geradkettigem oder verzweigten C₁- bis C₈-Alkyl, geradkettigem oder verzweigten C₁- bis C₈-Hydroxyalkyl und geradkettigem oder verzweigten C₁- bis C₈-Hydroxyalkoxy und
R₂ jeweils unabhängig voneinander ausgewählt aus der Gruppe bestehend aus geradkettigem oder verzweigtem C₁- bis C₈-Alkylen, geradkettigem oder verzweigtem C₁- bis C₅-Hydroxyalkylen und geradkettigem oder verzweigtem C₁- bis C₈-Alkylenoxy,
R₃ jeweils unabhängig voneinander R₁, R₂, eine Wiederholeinheit der allgemeinen Formeln II oder III und/oder eine Einfachbindung,
X- jeweils unabhängig voneinander ein als Gegenion zu den quaternären Ammoniumionen geeignetes Ion,
x = 2 oder 3,
sowie gegebenenfalls Wiederholeinheiten der allgemeinen Formel III 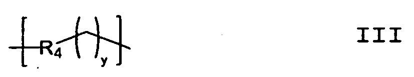 wobei R₄ ausgewählt ist aus der Gruppe der fünf- oder sechsgliedrigen Azaaromaten oder stickstoffhaltigen Heterocyclen mit mindestens zwei Stickstoffatomen oder deren substituierten Derivaten und y = 1 bis 6,
**dadurch gekennzeichnet, dass** über zumindest jeweils einen der Reste R₃ zweier Wiederholeinheiten der allgemeinen Formel I eine Quervernetzung der Hauptketten besteht.

2. Polymer nach Anspruch 1,
**dadurch gekennzeichnet, dass** R₁ jeweils unabhängig voneinander ausgewählt ist aus der Gruppe bestehend aus Methyl, Ethyl, Isopropyl, 2-Hydroxyethyl und -(CH₂)₂-[O-(CH₂)₂]_{z}-OH mit z = 0 bis 6.

3. Polymer nach einem der vorhergehenden Ansprüche,
**dadurch gekennzeichnet, dass** der Azaaromat ausgewählt ist aus der Gruppe bestehend aus Imidazol, Pyrazol, Pyrazidin, Pyrimidin, Pyrazin, Triazine und Tetrazin.

4. Polymer nach einem der vorhergehenden Ansprüche,
**dadurch gekennzeichnet, dass** der Azaaromat und/oder der stickstoffhaltige Heterocyclus durch mindestens einen Rest R₄ ausgewählt aus der Gruppe der geradkettigen und verzweigten C₁-C₈-Alkyle substituiert ist und/oder weitere Heteroatome aufweist.

5. Polymer nach einem der vorhergehenden Ansprüche,
**dadurch gekennzeichnet, dass** der stickstoffhaltige Heterocyclus Piperazin oder Imidazolidin ist.

6. Polymer nach einem der vorhergehenden Ansprüche,
**dadurch gekennzeichnet, dass**
A = O,
R₁ jeweils Methyl,
R₂ jeweils unabhängig voneinander ausgewählt ist aus der Gruppe bestehend aus geradkettigem oder verzweigtem C₁- bis C₈-Alkylen, geradkettigem oder verzweigtem C₁- bis C₈-Hydroxyalkylen und geradkettigem oder verzweigtem C₁- bis C₈-Alkylenoxy und
R₃ = R₃ = R₁, R₂ und/oder eine Einfachbindung,
wobei über jeden 3. bis jeden 20., insbesondere jeden 3. bis jeden 13. Rest R₃ zweier Wiederholeinheiten der allgemeinen Formel I eine Quervernetzung der Hauptketten besteht.

7. Polymer nach einem der vorhergehenden Ansprüche,
**dadurch gekennzeichnet, dass** das Polymer ein mittleres Molekulargewicht im Bereich von 1000 bis 200000 g/mol, insbesondere von 10000 bis 100000 g/mol aufweist.

8. Polymer nach einem der vorhergehenden Ansprüche,
**dadurch gekennzeichnet, dass** X⁻ ein Halogenid, insbesondere Cl⁻, Br⁻ oder I⁻ ist.

9. Verfahren zur Herstellung eines Polymers nach einem der vorhergehenden Ansprüche, bei dem in einem ersten Schritt Harnstoff oder dessen Heteroanaloga der allgemeinen Formel IV 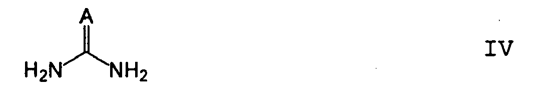 mit A ausgewählt aus der Gruppe bestehend aus O, S, NH,
mit einem N,N-Dialkylaminoalkylamin der allgemeinen Formel V, 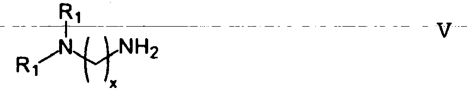 und einem N,N-Bis-(aminoalkyl)-alkylamin der allgemeinen Formel VI 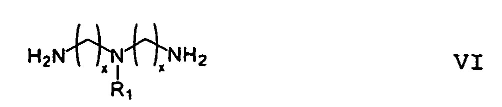 mit R₁ jeweils unabhängig voneinander ausgewählt aus der Gruppe bestehend aus geradkettigem oder verzweigten C₁- bis C₈-Alkyl, geradkettigem oder verzweigten C₁- bis C₈-Hydroxyalkyl und geradkettigem oder verzweigten C₁- bis C₈-Hydroxyalkoxy
unter Bildung von Di- und Tri-tert-Aminverbindungen umgesetzt wird und das Reaktionsprodukt in einem zweiten Schritt mit einem Alkyldihalogenid der allgemeinen Formal VII
Hal-R₂-Hal VII
umgesetzt wird.

10. Verfahren nach Anspruch 9,
**dadurch gekennzeichnet, dass** die Umsetzung im ersten Schritt bei Temperaturen im Bereich von 100 bis 300 °C unter Rühren erfolgt und sich bildendes Ammoniak abgeführt wird.

11. Verfahren nach einem der Ansprüche 9 oder 10,
**dadurch gekennzeichnet, dass** im zweiten Schritt die Di- und Tri-tert-Aminverbindungen in Wasser gelöst werden und das Alkyldihalogenid im Anschluß langsam unter Rühren bei Temperaturen im Bereich von 60 bis 200 °C zugesetzt wird.

12. Galvanisierungsbad für die galvanische Abscheidung von Metallen und/oder Metalllegierungen enthaltend mindestens ein Metallion, Hydroxidionen,
**dadurch gekennzeichnet,**
**dass** als Additiv ein Polymer nach einem der Ansprüche 1 bis 8 enthalten ist.

13. Galvanisierungsbad nach dem vorhergehenden Ansprüche,
**dadurch gekennzeichnet, dass** die Metallionen Zink-Ionen sind.

14. Galvanisierungsbad nach einem der Ansprüche 12 oder 13,
**dadurch gekennzeichnet, dass** die Metallionen ausgewählt sind aus der Gruppe bestehend aus Kobalt-, Nickel-, Mangan- Eisen- und Zinn-Ionen.

15. Galvanisierungsbad nach einem der Ansprüche 12 bis 14,
**dadurch gekennzeichnet, dass** das Polymer in einer Konzentration von 0,1 bis 5 g/l, insbesondere von 0,3 bis 1,5 g/l enthalten ist.

16. Galvanisierungsbad nach einem der Ansprüche 12
**dadurch gekennzeichnet, dass** das Galvanisierungsbad weitere Additive enthält.

17. Verwendung des Polymers nach einem der Ansprüche 1 bis 8 als Additiv bei der galvanischen Abscheidung von Metallen und/oder Metalllegierungen.

## Claims

1. Polymer having at least partially cross-linked polymeric main chains constructed from repeat units of the general formula I 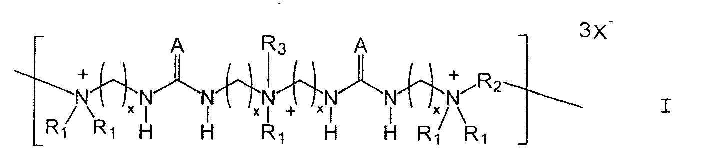 and possibly repeat units of the general formula II 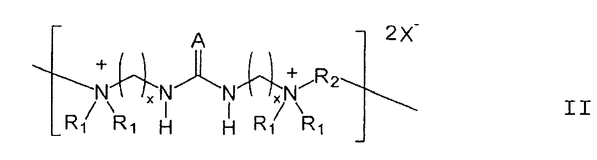 with
A selected from the group consisting of O, S, NH,
R₁, respectively independently of each other, selected from the group consisting of straight-chain or branched C₁ to C₈ alkyl, straight-chain or branched C₁ to C₈ hydroxyalkyl and straight-chain or branched C₁ to C₈ hydroxyalkoxy and
R₂, respectively independently of each other, selected from the group consisting of straight-chain or branched C₁ to C₈ alkylene, straight-chain or branched C₁ to C₈ hydroxyalkylene and straight-chain or branched C₁ to C₈ alkyleneoxy,
R₃, respectively independently of each other, R₁, R₂, a repeat unit of the general formulae II or III and/or a single bond,
X⁻, respectively independently of each other, an ion which is suitable as counter-ion to the quaternary ammonium ion,
x = 2 or 3,
and also possibly repeat units of the general formula III 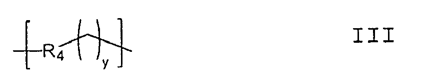 R₄ being selected from the group of five- or six-membered aza aromatics or nitrogen-containing heterocycles with at least two nitrogen atoms or the substituted derivatives thereof and y = 1 to 6,
**characterised in that**, via at least respectively one of the radicals R₃ of two repeat units of the general formula I, a cross-linking of the main chains exists.

2. Polymer according to claim 1, **characterised in that** R₁, respectively independently of each other, is selected from the group consisting of methyl, ethyl, isopropyl, 2-hydroxyethyl and -(CH₂)₂-[O-(CH₂)₂]_{z}-OH with z = 0 to 6.

3. Polymer according to one of the preceding claims,
**characterised in that** the aza aromatic is selected from the group consisting of imidazole, pyrazole, pyrazidine, pyrimidine, pyrazine, triazine and tetrazine.

4. Polymer according to one of the preceding claims,
**characterised in that** the aza aromatic and/or the nitrogen-containing heterocycle is substituted by at least one radical R₄ selected from the group of straight-chain and branched C₁ - C₈ alkyls and/or has further heteroatoms.

5. Polymer according to one of the preceding claims,
**characterised in that** the nitrogen-containing heterocycle is piperazine or imidazolidine.

6. Polymer according to one of the preceding claims,
**characterised in that**
A = O,
R₁ respectively methyl,
R₂, respectively, independently of each other, is selected from the group consisting of straight-chain or branched C₁ to C₈ alkylene, straight-chain or branched C₁ to C₈ hydroxyalkylene and straight-chain or branched C₁ to C₈ alkyleneoxy and
R₃ = R₃ = R₁, R₂ and/or a single bond,
via each 3^{rd} to each 20^{th}, in particular each 3^{rd} to each 13^{th}, radical R₃ of two repeat units of the general formula I, a cross-linking of the main chains being present.

7. Polymer according to one of the preceding claims,
**characterised in that** the polymer has an average molecular weight in the range of 1000 to 200,000 g/mol, in particular from 10,000 to 100,000 g/mol.

8. Polymer according to one of the preceding claims,
**characterised in that** X- is a halogenide, in particular Cl⁻, Br- or I⁻.

9. Method for producing a polymer according to one of the preceding claims, in which, in a first step, urea or the heteroanalogues thereof of the general formula IV 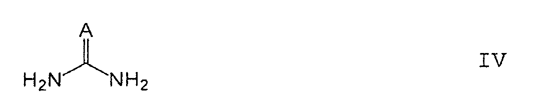 with A selected from the group comprising O, S, NH,
with an N,N-dialkylaminoalkylamine of the general formula V, 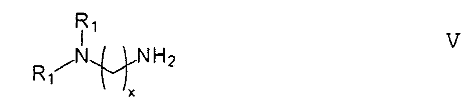 and an N,N-bis-(aminoalkyl)-alkylamine of the general formula VI 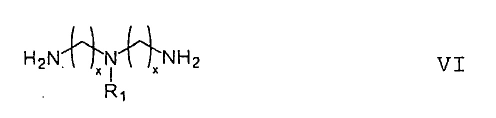 with R₁, respectively independently of each other, selected from the group consisting of straight-chain or branched C₁ to C₈ alkyl, straight-chain or branched C₁ to C₈ hydroxyalkyl and straight-chain or branched C₁ to C₈ hydroxyalkoxy is converted
with formation of di- and tri-tert-amine compounds and the reaction product is converted, in a second step, with an alkyldihalogenide of the general formula VII
Hal-R₂-Hal VII

10. Method according to claim 9,
**characterised in that** the conversion is effected, in the first step, at temperatures in the range of 100 to 300°C with agitation and ammonia which forms is discharged.

11. Method according to one of the claims 9 or 10,
**characterised in that**, in the second step, the di-and tri-tert-amine compounds are dissolved in water and the alkyldihalogenide is added subsequently slowly with agitation at temperatures in the range to 60 to 200°C.

12. Electroplating bath for the galvanic deposition of metals and/or metal alloys containing at least one metal ion, hydroxide ions, **characterised in that**
a polymer is contained as additive according to one of the claims 1 to 8.

13. Electroplating bath according to the preceding claim,
**characterised in that** the metal ions are zinc ions.

14. Electroplating bath according to one of the claims 12 or 13,
**characterised in that** the metal ions are selected from the group consisting of cobalt, nickel, manganese, iron and tin ions.

15. Electroplating bath according to one of the claims 12 to 14,
**characterised in that** the polymer is contained in a concentration of 0.1 to 5 g/l in particular of 0.3 to 1.5 g/l.

16. Electroplating bath according to one of the claims 12 to 15,
**characterised in that** the electroplating bath contains further additives.

17. Use of the polymer according to one of the claims 1 to 8 as additive in the galvanic deposition of metals and/or metal alloys.

## Revendications

1. Polymère présentant des chaînes principales polymères au moins partiellement réticulées, constituées d'unités de répétition de formule générale I suivante : 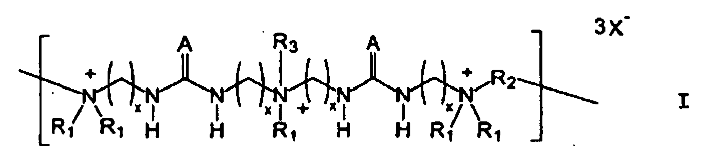 et, éventuellement, d'unités de répétition de formule générale II suivante : 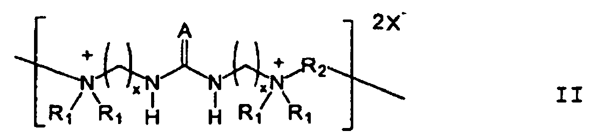 dans lesquelles
A est choisi dans le groupe constitué des éléments O, S et de NH,
R₁ est respectivement choisi, indépendamment l'un de l'autre, dans le groupe constitué des groupements alkyle en C₁-C₈ linéaire ou ramifié, hydroxyalkyle en C₁-C₈ linéaire ou ramifié et hydroxyalcoxy en C₁-C₈linéaire ou ramifié, et
R₂ est respectivement choisi, indépendamment l'un de l'autre, dans le groupe constitué des groupements alkylène en C₁-C₈ linéaire ou ramifié, hydroxyalkylène en C₁-C₅ linéaire ou ramifié ou alkylénoxy en C₁-C₈ linéaire ou ramifié,
R₃ représente respectivement, indépendamment l'un de l'autre, un radical R₁, R₂, une unité de répétition de formule générale II ou III et/ou une simple liaison,
X⁻ représente respectivement, indépendamment l'un de l'autre, un ion approprié comme contre-ion des ions d'ammonium quaternaire,
x = 2 ou 3,
ainsi qu'éventuellement des unités de répétition de formule générale III suivante : 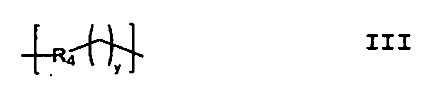 dans laquelle R₄ est choisi dans le groupe constitué de substances de type aza-aromatique ou d'hétérocycles contenant de l'azote, de cinq ou six éléments, ayant au moins deux atomes d'azote ou de leurs dérivés, et y = 1 à 6,
**caractérisé en ce que** l'on trouve, sur respectivement au moins l'un des radicaux R₃ de deux unités de répétition de formule générale I, une réticulation transversale des chaînes principales.

2. Polymère selon la revendication 1,
**caractérisé en ce que** R₁ est respectivement choisi, indépendamment l'un de l'autre, dans le groupe constitué des groupements méthyle, éthyle, isopropyle, 2-hydroxyéthyle et -(CH₂)₂-[O-(CH₂)₂]_{z}-OH avec z = 0 à 6.

3. Polymère selon l'une quelconque des revendications précédentes,
**caractérisé en ce que** la substance de type aza-aromatique est choisi dans le groupe constitué des composés suivants : imidazole, pyrazole, pyrazidine, pyrimidine, pyrazine, triazine et tétrazine.

4. Polymère selon l'une quelconque des revendications précédentes,
**caractérisé en ce que** la substance de type aza-aromatique et/ou l'hétérocycle contenant de l'azote est/sont substitué(s) par au moins un radical R₄ choisi dans le groupe constitué d'alkyles en C₁-C₈ linéaires ou ramifiés et/ou présente(nt) d'autres hétéroatomes.

5. Polymère selon l'une quelconque des revendications précédentes,
**caractérisé en ce que** l'hétérocycle contenant de l'azote est la pipérazine ou l'imidazolidine.

6. Polymère selon l'une quelconque des revendications précédentes,
**caractérisé en ce que**,
A=O,
R₁ représente respectivement un méthyle,
R₂ est respectivement choisi, indépendamment l'un de l'autre, dans le groupe constitué des groupements alkylène en C₁-C₈ linéaire ou ramifié, hydroxyalkylène en C₁-C₈ linéaire ou ramifié et alkylénoxy en C₁-C₈ linéaire ou ramifié, et
R₃ est un radical R₃ = R₁ = R₂ et/ou représente une liaison simple,
dans lequel il y a une réticulation transversale des chaînes principales tous les 3 à 20, en particulier tous les 3 à 13 radicaux R₃ de deux unités de répétition de formule générale I.

7. Polymère selon l'une quelconque des revendications précédentes,
**caractérisé en ce que** le polymère présente un poids moléculaire moyen compris dans la plage de 1000 à 200 000 g/mole, en particulier, de 10 000 à 100 000 g/mole.

8. Polymère selon l'une quelconque des revendications précédentes,
**caractérisé en ce que** le radical X- est un halogénure, en particulier, l'élément Cl⁻, Br⁻ ou I⁻.

9. Procédé pour la fabrication d'un polymère selon l'une quelconque des revendications précédentes, dans lequel on fait réagir, dans une première étape, de l'urée ou son hétéroanalogue de formule générale IV suivante : 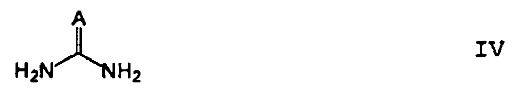 dans laquelle A est choisi dans le groupe constitué des éléments O, S et de NH,
avec une N,N-dialkylaminoalkylamine de formule générale V suivante : 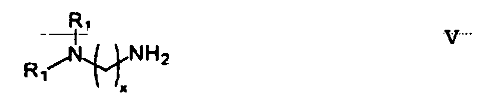 et avec une N,N-bis-(aminoalkyl)-alkylamine de formule générale VI suivante : 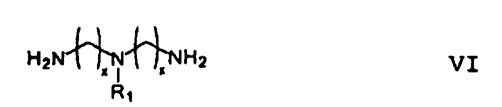 dans laquelle R₁ est respectivement choisi, indépendamment l'un de l'autre, dans le groupe constitué des groupements alkyle en C₁-C₈ linéaire ou ramifié, hydroxyalkyle en C₁-C₈ linéaire ou ramifié et hydroxyalcoxy en C₁-C₈ linéaire ou ramifié,
tout en formant des composés de di- et de tri-tert-amine, après quoi on fait réagir le produit réactionnel, dans le cadre d'une seconde étape, avec un dihalogénure d'alkyle de formule générale VII suivante :
Hal-R₂-Hal VII

10. Procédé selon la revendication 9,
**caractérisé en ce que** la réaction de la première étape est effectuée à des températures situées dans la plage de 100 à 300 °C sous agitation et **en ce que** l'ammoniac qui se forme est évacué.

11. Procédé selon l'une quelconque des revendications 9 ou 10, **caractérisé en ce que**, dans la seconde étape, on dissout les composés de di- et de tri-tert-amine dans de l'eau et on ajoute ensuite lentement le dihalogénure d'alkyle sous agitation à des températures comprises dans la plage de 60 à 200 °C.

12. Bain de galvanisation pour l'électrodéposition de métaux et/ou d'alliages métalliques contenant au moins un ion métallique, des ions hydroxyde,
**caractérisé en ce qu'**il contient, comme additif, un polymère selon l'une quelconque des revendications 1 à 8.

13. Bain de galvanisation selon la revendication précédente,
**caractérisé en ce que** les ions métalliques sont des ions de zinc.

14. Bain de galvanisation selon l'une quelconque des revendications 12 ou 13,
**caractérisé en ce que** les ions métalliques sont choisis dans le groupe constitué des ions de cobalt, de nickel, de manganèse, de fer et d'étain.

15. Bain de galvanisation selon l'une quelconque des revendications 12 à 14,
**caractérisé en ce que** le polymère y est contenu en concentration de 0,1 à 5 g/l, en particulier, de 0,3 à 1,5 g/l.

16. Bain de galvanisation selon l'une quelconque des revendications 12 à 15,
**caractérisé en ce que** le bain de galvanisation contient d'autres additifs.

17. Utilisation du polymère selon l'une quelconque des revendications 1 à 8, comme additif au cours de l'électrodéposition de métaux et/ou d'alliages métalliques.
